(19) Europäisches Patentamt
European Patent Office
Office européen des brevets

(11) Publication number: **0 223 913 B1**

(12) **EUROPEAN PATENT SPECIFICATION**

(45) Date of publication of patent specification: **27.03.91**

(51) Int. Cl.$^5$: **B23Q 1/08**, B23Q 11/00

(21) Application number: **86109991.9**

(22) Date of filing: **21.07.86**

(54) **Machine tool and compound damper system thereof.**

(30) Priority: **25.11.85 US 801668**

(43) Date of publication of application:
**03.06.87 Bulletin 87/23**

(45) Publication of the grant of the patent:
**27.03.91 Bulletin 91/13**

(84) Designated Contracting States:
**CH DE FR GB IT LI SE**

(56) References cited:
**DE-A- 2 642 584**
**GB-A- 2 139 928**
**US-A- 3 540 346**
**US-A- 4 134 309**
**GB-A- 1 165 540**
**US-A- 3 058 559**
**US-A- 4 084 861**

(73) Proprietor: **Cincinnati Milacron Inc.**
**(a Delaware Corporation), 4701 Marburg Avenue**
**Cincinnati, Ohio 45209(US)**

(72) Inventor: **Kamman, Joseph Thomas**
**3463 Whitfield**
**Cincinnati Ohio 45220(US)**

(74) Representative: **Lally, William et al**
**FORRESTER & BOEHMERT Widenmayerstrasse 4/I**
**W-8000 München 22(DE)**

**EP 0 223 913 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent oonvention).

## Description

This invention relates generally to damping of machine spindles and the like and, specifically, the invention relates to machines and other equipment having a relatively long working bar extending from the main machine body, where the bar is subjected to vibrational movements.

Machines such as horizontal boring machines and other similar machine tools are typically constructed so that a machine spindle or boring bar may slide relative to the machine base so that the tool tip at the outermost bar end is moved from a working position proximal to the machine base, to a fully-extended position distal to the machine base.

The extensible boring bar is effectively supported in two different manners at its extreme adjusting postions. When proximal the machine spindle base, the spindle behaves in a relatively simply supported manner, and is loaded at or near the first support, i.e. the snout of the machine. When fully-extended, the machine bar is basically cantilevered beyond the same two support points, and an intermediate deflection seen at the spindle is between the two support points. In the fully-retracted or simply supported, position, the maximum deflection seen by the spindle is at the snout, or end support. While no prior art patents attempt to solve the problem of vibrations occurring on such an extensible bar, several patents are generally noteworthy in the hydraulic damper art, as follows:

US-A-3,747,470 - Inoue et al: attempts to place a vibration damper at or near the loading point of a spindle, i.e. between the spindle bearing and the loading point of a spindle, whereas prior art devices attempt to place the support bearing up close to the loading point for high static stiffness. The device further teaches a viscous fluid film device with controlled fluid flow through the device. Inoue does not teach a mechanism whereby an extensible bar is moved between a relatively simply supported state to a two-support cantilever-load supported condition.

US-A-3,836,215 - Dopkins: teaches a single damper ring, wherein the damper ring contains a shaft bearing but the particular bearing does not support any load. The damper ring device features a bleed conduit so that viscous fluid may flow through the device. The bearing/damper ring is placed between a pair of load supporting bearings which effectively carry a shaft in a simply-supported manner. It is assumed, but not shown, in Dopkins that the load is an overhung load and that the maximum deflection of the shaft would be between the load supporting bearings.

US-A-3,897,985 - Davis et al: teaches a squeeze film shaft damper, having an annular ring around a shaft end bearing which is filled with fluid and sealed with 0-rings. The Davis patent does not teach how or where the load is applied to the shaft.

US-A-3,980,358 - Davis: a vertical assembly (Figures 1, 2 and 3) is depicted with an annular squeeze film damper around the bottom shaft and bearing. The device also features an axial damper flange on the radial end bearing damper.

US-A-4,084,861 - Greenberg: teaches a cantilevered bearing support with an annular damping ring around the spindle end bearing, which is designed to bottom out against a damper support which, in turn is likewise cantilever-mounted with a predetermined spring rate. The Greenberg patent does not teach the use of any other bearings to support the shaft, nor does it relate the device to a specfic shaft loading point.

US-A-3,456,992 - Kulina: teaches a radial damper ring around a shaft bearing, wherein the ring is cantilever-mounted to a base, and the device has a controlled orifice leakage for a viscous damping fluid.

A machine tool according to the precharacterising portion of claim 1 is is disclosed in US-A-3058559-Ohrnberger. This document discloses a horizontal boring machine comprising a housing, first and second spaced bearings in the housing, a spindle mounted for rotation about a longitudinal axis in said bearings, the spindle being movable longitudinally relative to the housing and bearings between a first position in which a working end thereof is adjacent to the first bearing and a second position where said working end is spaced from the first bearing on the side thereof opposite to that on which the second bearing is located, a damping member of cylindrical constructions, rotatable with the spindle, and a damping mechanism comprising twin damping chambers to damp the vibration of the spindle.

With regard to the types of machines to which the instant invention may be applied, U.S. Patent 3,540,346 - Jones, discloses a typical, undamped, horizontal boring machine with a hydraulically-actuated clamping sleeve for the boring bar.

Applicant has addressed the problem of damping the extensible boring bar and has solved it in a unique manner with a compound squeeze film damping device.

It is therefore an object of the present invention to effectively damp vibrations in a boring bar and other like bar-type machines wherein the boring bar is extensible between positions proximal to a machine base and distal to the machine base.

According to this invention there is provided a machine tool comprising a housing, first and second spaced bearings in the housing, a spindle mounted for rotation about a longitudinal axis in said bearings, the spindle being movable longitudinally relative to the housing and bearings between a first position in which a working end thereof is adjacent to the first bearing and a second position where said working end is spaced from the first bearing on the side thereof opposite to that on which the second bearing is located, a damping member of cylindrical construction, rotatable with the spindle, and a damping mechanism comprising a chamber containing a damping medium located axially between the first and second bearings and which is operative between the spindle and the damping member to damp radial vibrations of the spindle,

characterised in that (a) the damping member comprises a first portion embracing the spindle and a second, cylindrical portion extending as a cantilever from the first portion over a region of the spindle located between the bearings, the damping chamber being constituted between the cantilevered portion and the adjacent region of the spindle: and (b) a second damping mechanism is provided which comprises a damping chamber containing a damping medium and located between the housing and the first bearing, the first said damping mechanism being operative primarily when the spindle is extended and the second damping mechanism being operative primarily when the spindle is retracted.

Preferably said first portion of the damping member is at a forward region thereof, being supported by the first bearing, and preferably an additional bearing is provided to support the damping member over the region thereof which defines the first said damping chamber.

Preferably the first bearing is located in the housing adjacent to an outer face thereof and the first said damping mechanism is operative at a point approximately mid-way between said first and second bearings.

Desirably each damping chamber has a viscous damping medium therein, but if desired viscoelastic elements may be utilised.

Advantageously the second damping mechanism is located radially exteriorly of the first bearing, and the first said damping chamber extends rearwardly of the system from a point axially adjacent to the second damping chamber, and the first damping chamber is located radially inwardly of the second damping chamber.

Advantageously the tool bar has a non-circular cross-section over a portion at least of its length at which torque is transmitted thereto by drive mechanism.

There will now be given a detailed description, to be read with reference to the accompanying drawings, of a machine tool, comprising a compound damper system, which is a preferred embodiment of this invention, and which has been selected for the purposes of illustrating the invention by way of example.

In the accompanying drawings:

FIGURE 1 of the drawings is a front perspective view of a machine employing a horizontal boring bar unit;

FIGURE 2 is a side elevational section through the spindle carrier unit of Figure 1;

FIGURE 3 is an enlarged side elevational section through the damper assembly of Figure 2;

FIGURES 4a and 4b are diagrammatic views through the boring bar unit and damper assembly of Figure 2, with the bar in the fully retracted position; and

FIGURES 5a and 5b are diagrammatic views through the boring bar and damper unit of Figure 2 illustrating the bar in the fully advanced condition.

Figure 1 of the drawings illustrates an exemplary horizontal boring machine 10 having a spindle afforded by a boring bar 11 which is carried in a spindle carrier 12 on vertical ways 13. The sectional view, Figure 2, illustrates that the boring bar 11 is carried in a snout support and damper assembly 14 at the outermost face 15 of the spindle carrier housing 16. The bar 11 extends inwardly through a support quill 17 carried in a set of rotary bearings 18 and continues through an intermediate support tube 19, onto an end portion 20 which is rotatably supported in end bearings 21. The end bearings 21 are, in turn, carried in an end block 22 propelled axially by a ball screw and nut unit 23. Therefore, the bar 11 may rotate while being advanced and retracted by the ball screw and nut unit 23. The Torque couple to the boring bar 11 is typically attached near the forward end of the bar 11 at the final gear 24 in a drive transmission 25. In prior art assemblies, the torque couple comprises a key and keyway, wherein the keyway runs the length of the bar and therefore extends out into space when the bar is fully extended. In the preferred embodiment depicted in Figure 2, the boring bar 11 has a non-circular cross-section, so that torque may be transmitted from the final gear 24 to the bar 11 without the need for keys and keyways. Here it should be noted that the intermediate support tube 19 is also rotatably journalled because of the non-circular cross-section. In a circular bar system, the intermedate support tube 19 need not be rotatably carried, but may simply comprise a plain bushing to provide radial support.

The closeup sectional view of Figure 3 illustrates the snout support and damper assembly 14, wherein the snout 26 is a conical casting having a flange 27 bolted the front face 15 of the spindle carrier housing 16. The snout 26 is bored throughout and has a precision bore 28 near its outermost face 29. An outer quill 30 is located in the precision bore 28 and extends inwardly to the inner counterbored face 31 of the snout 26 where an integral diaphragm flange portion 32 on the outer quill 30 is bolted to the snout 26. A thin, squeeze-film, annular damping chamber 33 is formed between the quill 30 and the precision bore 28 of the snout 26. The chamber 33 is sealed with 0-rings 34 at both ends and filled with a viscous damping medium. In this supported manner the quill 30 may deflect and rock in a cantilever fashion about the diaphragm flange portion 32.

The outer quill 30 has an inner bore 35 in which the bearing 18 is located. The inner quill 36 is a generally cylindrical unit and is restrained from axial movement with respect to the bearing 18 and the outer quill 30. The inner quill 36 has a bore 37 (in this case non-circular) adapted to slidably support the extensible bar 11. A relief portion 38 is machined along the bore 37 of the inner quill 36, extending axially from the first annular damping chamber 33 to the innermost face 39 of the inner quill 36, said portion 38 being supported, over said relieved section by an additional bearing unit 18a . The relief portion 38 forms a second generally annular, thin squeeze-film damping chamber 40 which is open at the innermost quill face 39, and viscous fluid may be ported through the damping chamber 40 by means of interdrilled holes 42,43,44.

The antifriction bearings 18 etc., are of such high static stiffness so as to be treated as rigid when compared to the two squeeze-film damping chambers 33,40.

Referring to the diagrammatic views of Figures 4a and 4b , the boring bar 11 is shown fully retracted, and is loaded with a force $F_1$ at a point 45 proximal the first set of bearings i.e., where the bar 11 is deflectable against the annular damping chamber 33. An effective length $L_1$ is created from the intermediate support tube 19, located within the spindle carrier housing 16, to the outermost bar end or loading point 45, and the effective bar length $L_1$ may be considered simply-supported. Figure 4b illustrates that the maximum deflection delta 1 is expected at the load point 45 due to the relatively low static stiffness at the snout support points $S^1$. While the damping chamber 33 is actually a short distance $D_1$ from the end of the bar 11, D1 is negligible when compared to effective bar length, $L^1$. The snout support points $S^1$ has a damping coefficient C1 and spring constant $K_1$ effected by the annular damping chamber 33. Figure 5a illustrates the boring bar 11 in a fully extended condition, whereby an effective length L2 is realised from the intermediate support tube 19 to the outermost point 46 where force $F^z$ is applied.

In the preferred embodiment, the overhand $D_3$ from the snout 26 may be in the range of three feet, whereby the intermediate support tube 19 may be located approximately 2 to 3 feet to the interior of the spindle carrier housing 16. In the diagrammatic drawing of Figure 5b , the bar 11, cantilevered an amount $D_3$, and deflected at the end point 46 to dimension delta 3 will cause a deflection delta 2 of the bar 11 at a point between the snout support point $S_1$ and the intermediate support tube point $S_2$. Therefore, it is advantageous to provide a damping unit $C_2$ at a point along the bar 11, inward from the support point $S_1$. With reference also to Figures 2 and 3, the annular damping chamber 40 is formed around the boring bar 11 at an inward position measured axially as $D_2$.

It will be appreciated by those skilled in the art that the compound damper system shown may be formed with visco-elastic damper elements taken along or in combination with the viscous damper elements shown in the damping chambers 33,40.

While the invention has been shown in connection with a preferred embodiment, it is not intended that the invention be so limited, but rather, the invention extends to all such designs and modifications as come within the scope of the appended claims.

## Claims

1. A machine tool comprising a housing (16, 18), first and second spaced bearings (18, 19) in the housing, a spindle (11) mounted for rotation about a longitudinal axis in said bearings, the spindle being movable longitudinally relative to the housing and bearings between a first position in whioh a working end (46) thereof is adjacent to the first bearing (18) and a second position where said working end is spaced from the first bearing on the side thereof opposite to that on which the second bearing (19) is located, a damping member (36) of cylindrical construction, rotatable with the spindle (11), and a damping mechanism (28, 34) comprising a chamber (40) containing a damping medium located axially between the first and second bearings (18, 19) and which is operative between the spindle (11) and the damping member (36) to damp radial vibrations of the spindle (11),
characterised in that (a) the damping member (36) comprises a first portion (37) embracing the spindle and a second, cylindrical portion (38) extending as a cantiliever from the first portion over a region of the spindle located between the bearings (18, 19), the damping chamber (40) being constituted between the cantilevered portion (38) and the adjacent region of the spindle: and (b) a second damping mechanism (28, 33, 34) is provided which comprises a damping chamber (33) containing a damping medium and located between the housing and the first bearing (18), the first said damping mechanism being operative primarily when the spindle is extended and the second damping mechanism being operative primarily when the spindle is retracted.

2. A machine tool according to Claim 1 wherein said first portion (37) of the damping member is at a forward region (37) of the member, being supported by the first bearing (18).

3. A machine tool according to one of claims 1 and 7 wherein an additional bearing (18a ) is provided to support said damping member (36) over the region (38) thereof which defines the first said damping chamber (40).

4. A machine tool according to any one of the preceding claims wherein the first bearing (18) is located in said housing adjacent to an outer face (29) thereof and the first said damping mechanism (36, 37, 38) is operative at a point approximately midway between said first and second bearings (18, 19).

5. A machine tool according to any one of the preceding claims wherein each damping chamber has a viscous damping medium therein.

6. A machine tool according to any one of the preceding claims wherein the second damping mechanism (33) is located radially exteriorly of the first bearing (18).

7. A machine tool according to any one of the preceding claims wherein the first said damping chamber (40) extends rearwardly of the system from a point axially adjacent to the second damping chamber (33).

8. A damper system according to Claim 7 wherein the first said damping chamber (40) is located radially inwardly of the second damping chamber (33).

9. A damper system according to any one of Claims 4 to 8 wherein the spindle has a non-circular cross-section over a portion at least of its length at which torque is transmitted thereto by drive mechanism (24).

**Revendications**

1. Machine-outil comrenant un logement (16,18), des premier et second paliers espacés (18, 19) dans le logement, une broche (11) montée en rotation autour d'un axe longitudinal dans les paliers, la broche étant mobile longitudinalement par rapport au logement et aux paliers entre une première position dans laquelle une de ses extrémités de travail (46) est contiguë au premier palier (18) et une seconde position où l'extrémité de travail est espacée du premier palier sur son côté opposé à celui sur lequel est situé le second palier (19), un élément amortisseur (36) de construction cylindrique, pouvant être amené en rotation avec la broche (11), et un mécanisme d'amortissement (28, 34) comprenant une chambre (40) contenant un agent d'amortissement situé axialement entre les premier et second paliers (18, 19) et qui est opérationnel entre la broche (11) et l'élément d'amortissement (36) de façon à amortir les vibrations radiales de la broche (11),

caractérisée en ce que (a) l'élément amortisseur (36) comprend une première portion (37) englobant la broche et une seconde portion cylindrique (38) s'étendant en porte-à-faux à partir de la première portion sur une zone de la broche située entre les paliers (18, 19), la chambre d'amortisseinent (40) étant constituée entre la portion en porte-à-faux (38) et la zone contiguë de la broche ; et (b) il est prévu un second mécanisme d'amortissement (28, 33, 34) qui comprend une chambre d'amortissement (33) contenant un agent d'amortissement et situé entre le logement et le premier palier (18), le premier mécanisme d'amortissement étant essentiellement opérant lorsque la broche est rentrée.

2. Machine-outil selon la revendication 1, dans laquelle la première portion (37) de l'élément d'amortissement est située sur une région avant (37) de l'élémont, et supportée par le premier palier (I8).

3. Machine-outil selon la revendication 1 ou 2, dans laquelle un palier supplémentaire (18a) est prévu de façon à supporter l'élément d'amortissement (36) sur la zone (38) de celui-ci qui définit la première chambre d'amortissement (40).

4. Machine-outil selon l'une quelconque des revendications précédentes, dans laquelle le premier palier (18) est situé dans le logement contigu à une face extérieure (29) de celui-ci et le premier mécanisme d'amortissement (36, 37, 38) opérant sur un point situé approximativement à mi-chemin entre les premier et second paliers (18, 19).

5. Machine-outil selon l'une quelconque des revendications précédentes, dans laquelle chaque chambre d'amortissement renferme un agent d'amortissement visqueux.

6. Machine-outil selon l'une quelconque des revendications précédentes, caractérisée en ce que le second mécanisme d'amortissement (33) est situé radialement et extérieurement au premier palier (18).

7. Machine-outil selon l'une quelconque des revendications précédentes, dans laquelle la première chambre d'amortissement (40) s'étend vers l'arrière du système à partir d'un point axialement contigu à la seconde chambre d'amortissement (33).

8. Système amortisseur selon la revendication 7, dans lequel la première chambre d'amortissement (40) est située radialement et vers l'intérieur de la seconde chambre d'amortissement (33).

9. Système amortisseur selon l'une quelconque des revendications 4 à 8, dans lequel la broche présente une section transversale circulaire sur une portion au moins de sa longueur au niveau de laquelle est transmis le couple par mécanisme d'entraînement (24).

**Ansprüche**

1. werkzeugmaschine, mit einem Gehäuse (16, 18), ersten und zweiten, in dem Gehäuse beabstandet angeordneten Lagern (18, 19), einer um eine Längsachse in den Lagern drehbar befestigten Spindel (11), die in Längsrichtung relativ zu dem Gehäuse und den Lagern zwischen einer ersten Position, in der deren eines Arbeitsende (46) dem ersten Lager (18) benachbart und einer zweiten Position, in der das Arbeitsende von dem ersten Lager auf dessen der Seite, an der das zweite Lager (19) angeordnet ist, gegenüberliegenden Seite beabstandet ist, beweglich ist, einem Dämpfungselement (36) mit zylindrischem Aufbau, daß mit der Spindel (11) drehbar ist und einem Dämpfungsmechanismus (28, 34) mit einer Kammer (40), die ein zwischen dem ersten und dem zweiten Lager (18, 19) angeordnetes Dämpfungsmedium aufnimmt, und der zwischen der Spindel (11) und dem Dämpfungselement (36) wirkt, um radiale Vibrationen der Spindel (11) zu dämpfen, dadurch gekennzeichnet, daß
a) das Dämpfungselement (36) einen ersten, die Spindel umgebenden Abschnitt (37) und einen zweiten, zylindrischen Abschnitt (38) aufweist, der sich als Kragarm von dem ersten Abschnitt aus über einen zwischen den Lagern (18, 19) angeordneten Bereich der Spindel erstreckt, wobei die Dämpfungskammer (40) durch den auskragenden Abschnitt (38) und dem benachbarten Abschnitt der Spindel gebildet wird, und
b) ein zweiter Dämpfungsmechanismus (38, 33, 34) vorgesehen ist, der eine ein Dämpfungsmedium aufnehmende, zwischen dem Gehäuse und dem ersten Lager (18) angeordneten Dämpfungskammer (33) aufweist, wobei der erste Dämpfungsmechanismus hauptsächlich Verwendung findet, wenn die Spindel ausgefahren ist und der zweite Dämpfungsmechanismus hauptsächlich Verwendung findet, wenn die Spindel eingefahren ist.

2. Werkzeugmaschine nach Anspruch 1, wobei der erste Abschnitt (37) des Dämpfungselements an einem vorderen Abschnitt (37) des Elements angeordnet ist, der von dem ersten Lager (18) gestützt wird.

3. Werkzeugmaschine nach Anspruch 1 oder Anspruch 2, wobei ein zusätzliches Lager (18a) vorgesehen ist, um das Dämpfungselement (36) über dem Bereich (38), der die erste Dämpfungskammer (40) begrenzt, zu stützen.

4. Werkzeugmaschine nach einem der vorangehenden Ansprüche, wobei das erste Lager (18) in dem Gehäuse einer Außenfläche (29) benachbart angeordnet ist und der erste Dämpfungsmechanismus (36, 37, 38) an einem Ort benachbart der Mitte zwischen dem ersten und dem zweiten Lager (18, 19) wirkt.

5. Werkzeugmaschine nach einem der vorangehenden Ansprüche, wobei jede Dämpfungskammer ein viskoses Dämpfungsmedium aufnimmt.

6. Werkzeugmaschine nach einem der vorangehenden Ansprüche, wobei der zweite Dämpfungsmechanismus (33) radial außerhalb des ersten Lagers (18) angeordnet ist.

7. Werkzeugmaschine nach einem der vorangehenden Ansprüche, wobei die erste Dämpfungskammer (40) sich von einem axial benachbart der zweiten Dämpfungskammer (33) von dem System aus nach hinten erstreckt.

8. Dämpfungssystem nach Anspruch 7, wobei die erste Dämpfungskammer (40) radial nach innen von der zweiten Dämpfungskammer (33) aus erstreckt.

9. Dämpfungssystem nach einem der Ansprüche 4 bis 8, wobei die Spindel über einen Abschnitt wenigstens in einer Länge, an dem ein Drehmoment auf diese über einen Antriebsmechanismus (24) übertragen wird, einen nichtkreisförmigen Querschnitt aufweist.

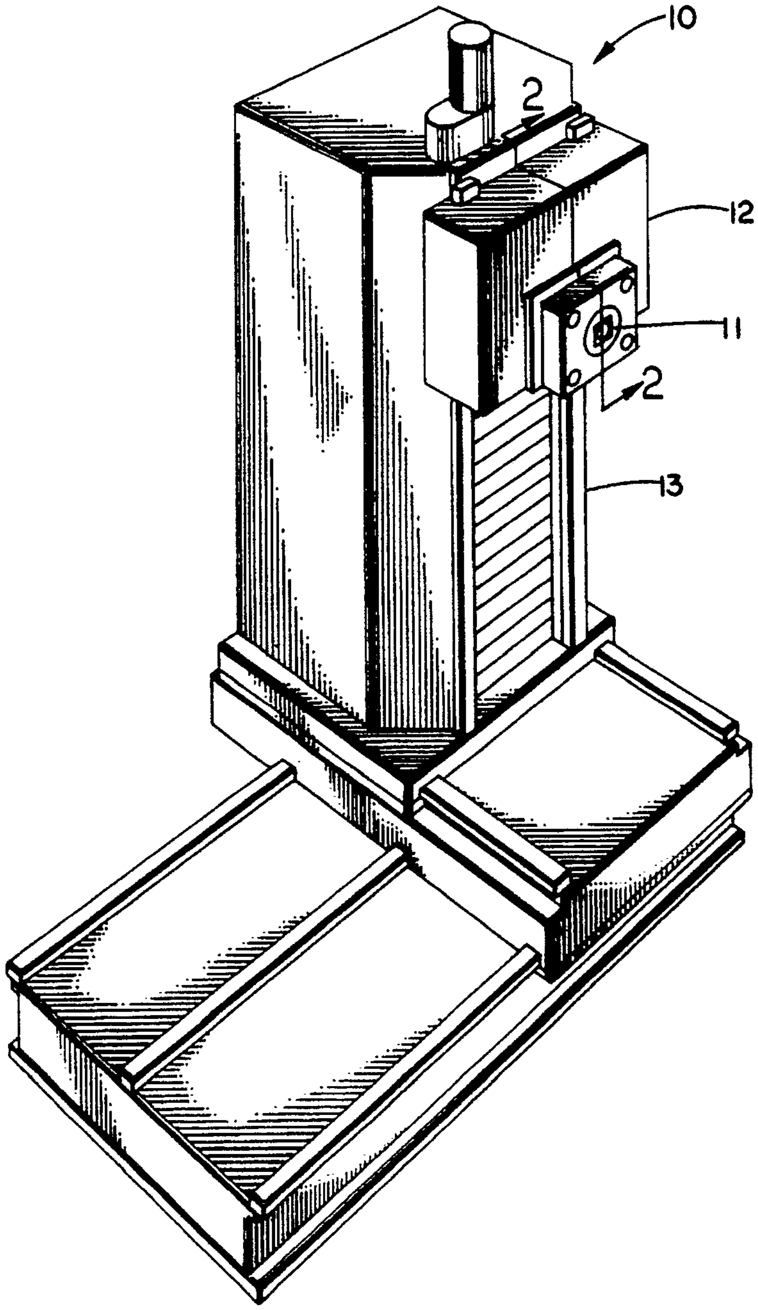


FIG. 1

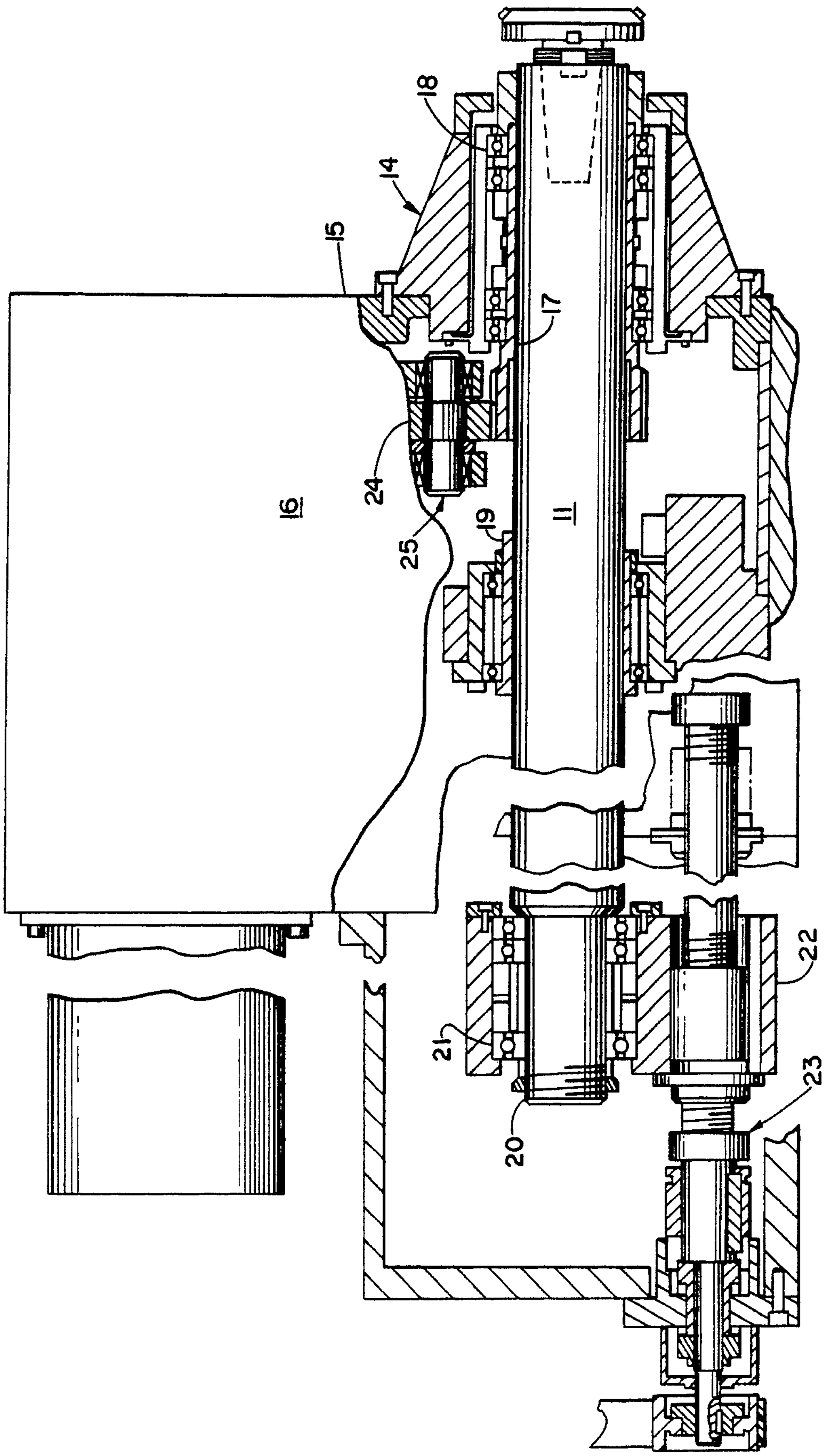


FIG. 2

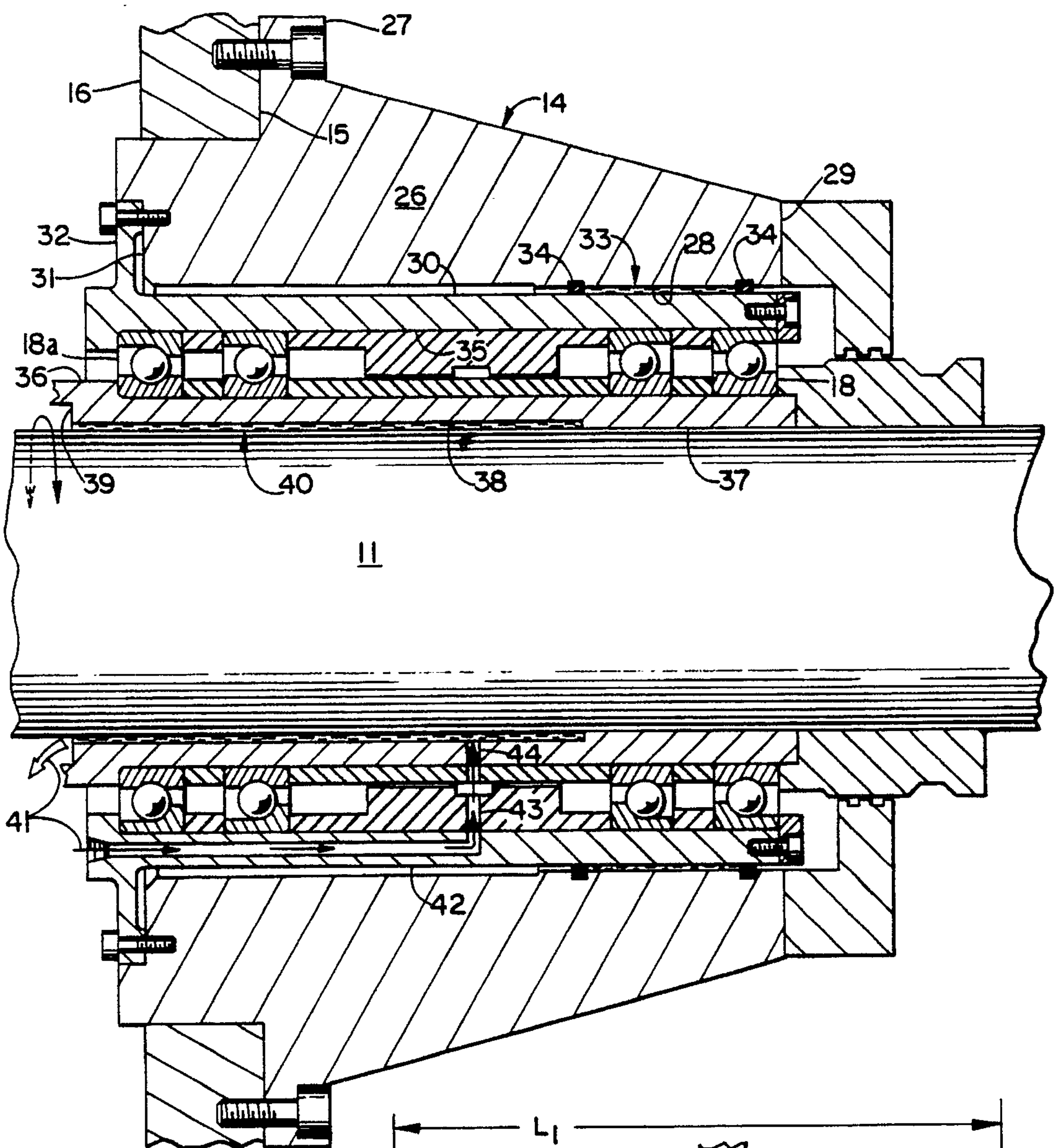
27
16
15
14
26
29
32
31
30
34
33
28
34
18a
35
36
18
39
40
38
37
11
44
41
43
42

FIG. 3

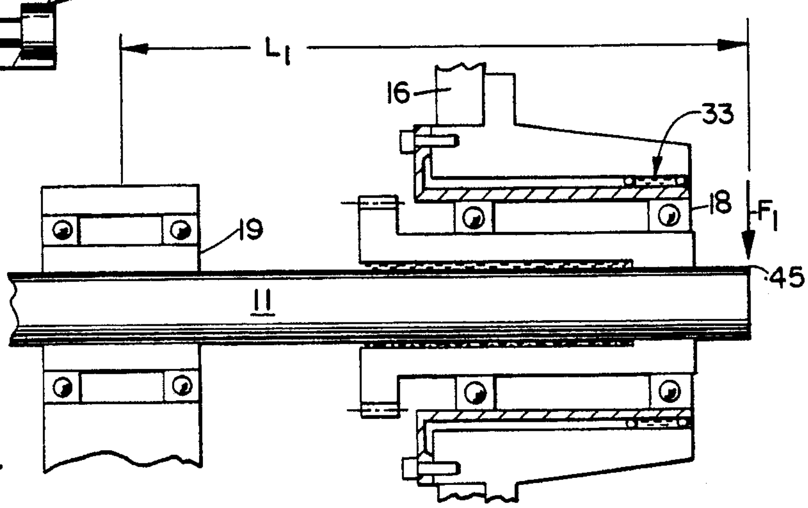
L1
16
33
18
F1
19
45
11

FIG. 4a

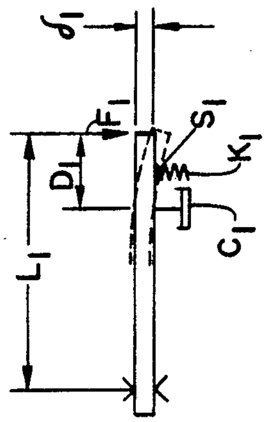


FIG. 4b

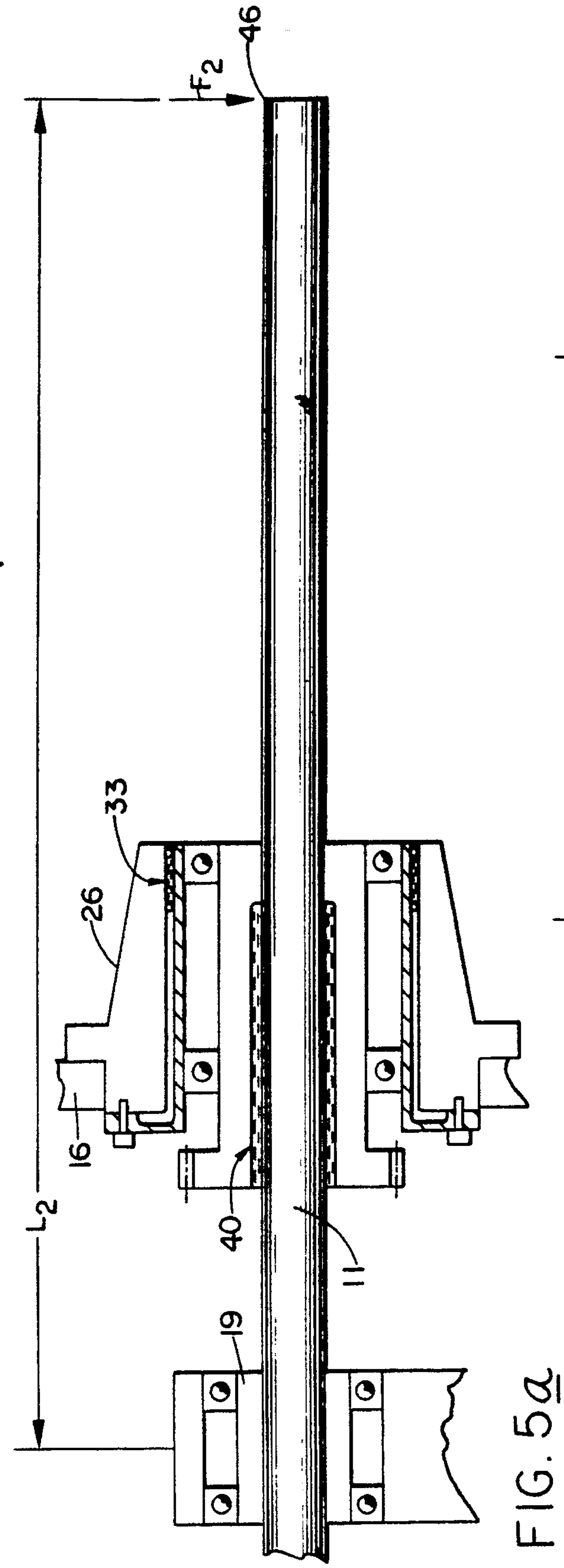


FIG. 5a

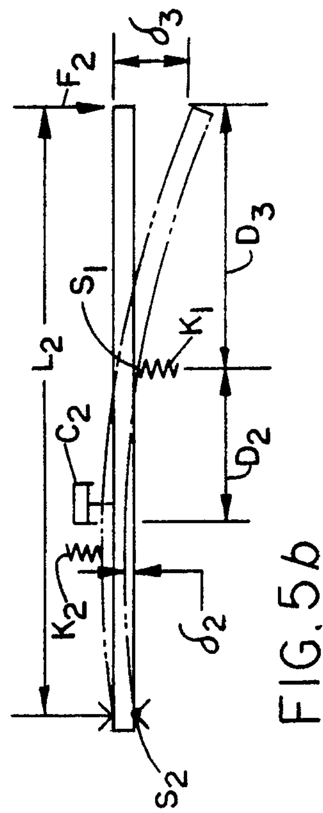


FIG. 5b